# EUROPÄISCHE PATENTSCHRIFT

(11) **EP 3 186 120 B1**
(45) Veröffentlichungstag und Bekanntmachung des Hinweises auf die Patenterteilung: **06.03.2019**
(21) Anmeldenummer: 15749987.2
(22) Anmeldetag: 06.08.2015
(51) Int. Cl.: B60T 8/36

(54) **VENTILEINHEIT ZUR DRUCKMODULATION IN EINER DRUCKLUFT-BREMSANLAGE**
VALVE UNIT FOR MODULATING THE PRESSURE IN A PNEUMATIC BRAKE SYSTEM
UNITÉ DE SOUPAPE POUR LA MODULATION EN PRESSION DANS UNE INSTALLATION DE FREINAGE PNEUMATIQUE

(30) Priorität: 27.08.2014 DE 102014012596
(43) Veröffentlichungstag der Anmeldung: 05.07.2017
(73) Patentinhaber: WABCO GmbH, 30453 Hannover (DE)
(72) Erfinder: FÜLLGRABE, Dirk, 31249 Hohenhameln (DE); KNOKE, Stefan, 30657 Hannover (DE); RUNGE, Karsten, 31832 Springe (DE); TEICHMANN, Andreas, 30916 Isernhagen (DE)
(74) Vertreter: Lauerwald, Jörg
(86) Internationale Anmeldenummer: PCT/EP2015/001629
(87) Internationale Veröffentlichungsnummer: WO 2016/029995

(56) Entgegenhaltungen:
- EP-A1- 0 439 303
- EP-A1- 0 539 770
- WO-A1-2008/034524
- DE-A1- 2 517 571
- DE-A1- 2 733 883
- DE-B3-102008 028 439

## Beschreibung

Die Erfindung betrifft eine Ventileinheit zur Druckmodulation in einer Druckluft-Bremsanlage gemäß dem Oberbegriff des Patentanspruchs 1 und des Patentanspruchs 4. Eine derartige Ventileinheit beziehungsweise Druckluft-Bremsanlage kann beispielsweise für den Einbau in ein Kraftfahrzeug vorgesehen sein.

In blockiergeschützten, also mit einem Antiblockiersystem ausgerüsteten Druckluft-Bremsanlagen von Radfahrzeugen, wie Kraftfahrzeugen und Schienenfahrzeugen, ist in den von einem Bremsventil zu den Radbremszylindern führenden Bremsleitungen jeweils eine Ventileinheit zur Druckmodulation angeordnet. Diese Ventileinheit weist ein Einlassventil und ein Auslassventil auf. Mittels des Einlassventils ist ein Bremsdruckausgang wechselweise mit einem Bremsdruckeingang verbindbar oder gegenüber diesem absperrbar. Der Bremsdruckausgang ist an einem zu mindestens einem Radbremszylinder führenden Abschnitt einer Bremsleitung angeschlossen, und an dem Bremsdruckeingang ist ein von dem Bremsventil kommenden Abschnitt der Bremsleitung angeschlossen. Mit dem Auslassventil ist der Bremsdruckausgang wechselweise mit einem Entlüftungsausgang verbindbar oder gegenüber diesem absperrbar, welcher üblicherweise über einen Schalldämpfer in die Umgebung führt.

Aufgrund großer zu schaltender Volumenströme und entsprechend großer zu öffnender und zu schließender Strömungsquerschnitte sind das Einlassventil und das Auslassventil häufig als pneumatisch betätigbare Membranventile ausgebildet, die mittels jeweils ein als 3/2-Wege-Magnetventil ausgebildetes Vorsteuerventil ansteuerbar sind. Ein Membranventil weist eine weitgehend kreisscheibenförmige flexible Membran auf, die an ihrem Rand in einem Ventilgehäuse eingespannt ist. Auf der axialen Innenseite der Membran, auf der die mit den Drucklufteingängen und Druckluftausgängen verbundenen Strömungskanäle angeordnet sind, sind ein zentraler, kreisrunder Ventilsitz eines zylindrischen inneren Strömungskanals und ein konzentrisch dazu angeordneter ringförmiger äußerer Strömungskanal angeordnet. Auf der axial gegenüberliegenden Außenseite der Membran ist eine Steuerkammer angeordnet, die durch das zugeordnete Vorsteuerventil wechselweise mit einem üblicherweise am Bremsdruckeingang entnommenen hohen Steuerdruck oder mit einem zumeist am Entlüftungsausgang entnommenen niedrigen Steuerdruck (Umgebungsdruck) beaufschlagbar ist.

Bei einer Beaufschlagung der Steuerkammer mit dem hohen Steuerdruck wird die Membran gegen den Ventilsitz gedrückt, wodurch der innere Strömungskanal gegenüber dem äußeren Strömungskanal abgesperrt wird, welches dem geschlossenen Zustand des betreffenden Membranventils entspricht. Bei einer Beaufschlagung der Steuerkammer mit dem niedrigen Steuerdruck wird die durch Formgebung zumeist selbsttätig an dem Ventilsitz anliegende Membran durch den in den Strömungskanälen herrschenden Bremsdruck von dem Ventilsitz abgehoben und in Richtung der Steuerkammer verschoben, wodurch der innere Strömungskanal mit dem äußeren Strömungskanal verbunden wird, welches dem geöffneten Zustand des betreffenden Membranventils entspricht.

Eine derartige Ventileinheit weist die Schaltfunktionen "Druckaufbau", "Druckhalten" und "Druckabbau" auf. In der Schaltfunktion "Druckaufbau" der Ventileinheit ist das Einlassventil geöffnet und das Auslassventil geschlossen, so dass der über das Bremsventil am Bremsdruckeingang eingesteuerte Bremsdruck unverändert an den Bremsdruckausgang sowie an mindestens einen daran angeschlossenen Radbremszylinder weitergeleitet wird. Da die Schaltfunktion "Druckaufbau" dem Ruhezustand der Ventileinheit entspricht, verbindet das Vorsteuerventil des Einlassventils im unbestromten Zustand seiner Magnetspule die Steuerkammer des Einlassventils mit einer den niedrigen Steuerdruck führenden Steuerleitung. Ebenso verbindet das Vorsteuerventil des Auslassventils im unbestromten Zustand seiner Magnetspule die Steuerkammer des Auslassventils mit einer den hohen Steuerdruck führenden Steuerleitung.

In der Schaltfunktion "Druckhalten" der Ventileinheit sind das Einlassventil und das Auslassventil geschlossen, so dass der am Bremsdruckausgang und dem mindestens einen daran angeschlossenen Radbremszylinder anliegende Bremsdruck dann konstant gehalten wird. Zur Einstellung dieser Schaltfunktion wird nur das Vorsteuerventil des Einlassventils durch Bestromung seiner Magnetspule umgeschaltet und damit die Steuerkammer des Einlassventils mit dem hohen Steuerdruck beaufschlagt. In der Schaltfunktion "Druckabbau" der Ventileinheit ist das Einlassventil geschlossen und das Auslassventil geöffnet, so dass der Bremsdruckausgang und der mindestens eine daran angeschlossene Radbremszylinder dann in die Umgebung entlüftet werden. Zur Einstellung dieser Schaltfunktion werden beide Vorsteuerventile durch Bestromung ihrer Magnetspulen umgeschaltet und damit die Steuerkammer des Einlassventils mit dem hohen Steuerdruck und die Steuerkammer des Auslassventils mit dem niedrigen Steuerdruck beaufschlagt.

Die Schaltfunktionen "Druckhalten" und "Druckabbau" der Ventileinheit sind Blockierschutzfunktionen, mit denen ein bremsbedingtes Blockieren des mindestens einen zugeordneten Rades vermieden werden soll. Diese Schaltfunktionen werden durch eine entsprechende Ansteuerung der Vorsteuerventile von einem Steuergerät eines Antiblockiersystems gesteuert, in dem die Signale von Raddrehzahlsensoren zur Erkennung eines bevorstehenden oder schon eingetretenen Blockierens der gebremsten Räder ausgewertet werden.

Hinsichtlich der geometrischen Anordnung der Drucklufteingänge und Druckluftausgänge der als Membranventile ausgebildeten Einlass- und Auslassventile und der als Magnetventile ausgebildeten Vorsteuerventile in einem Ventilgehäuse sind unterschiedliche Ausführungsformen von Ventileinheiten bekannt.

In der DE 22 24 274 C3 ist eine Ventileinheit beschrieben, bei welcher der Bremsdruckeingang in Einbaulage horizontal und der Bremsdruckausgang sowie der Entlüftungsausgang vertikal nach unten gerichtet in dem Ventilgehäuse angeordnet sind. Das Einlassventil ist benachbart zu dem Bremsdruckeingang mit vertikaler Ausrichtung seiner Betätigungsachse und horizontaler Ausrichtung seiner Membran in dem Ventilgehäuse angeordnet, wogegen das Auslassventil horizontal gegenüberliegend mit horizontaler Ausrichtung seiner Betätigungsachse und vertikaler Ausrichtung seiner Membran in dem Ventilgehäuse angeordnet ist. Das Vorsteuerventil des Einlassventils ist mit horizontaler Ausrichtung seiner Betätigungsachse oberhalb der Membran des Einlassventils in dem Ventilgehäuse angeordnet, wogegen das Vorsteuerventil des Auslassventils mit vertikaler Ausrichtung seiner Betätigungsachse zwischen der Membran des Auslassventils und einer vertikalen Außenwand des Ventilgehäuses angeordnet ist.

Aus der DE 40 05 608 A1 ist dagegen eine Ventileinheit bekannt, bei welcher der Bremsdruckeingang und der Bremsdruckausgang in Einbaulage mit horizontaler Ausrichtung axial gegenüberliegend und der Entlüftungsausgang mit horizontaler Ausrichtung oberhalb des Bremsdruckausgangs in dem Ventilgehäuse angeordnet sind. Das Einlassventil ist in etwa mittig unterhalb des Bremsdruckeingangs und des Bremsdruckausgang mit vertikaler Ausrichtung seiner Betätigungsachse und horizontaler Ausrichtung seiner Membran in dem Ventilgehäuse angeordnet, wogegen das Auslassventil oberhalb des Entlüftungsausgangs mit vertikaler Ausrichtung seiner Betätigungsachse und horizontaler Ausrichtung seiner Membran in dem Ventilgehäuse angeordnet ist. Das Vorsteuerventil des Einlassventils ist mit horizontaler Ausrichtung seiner Betätigungsachse unterhalb der Membran des Einlassventils in dem Ventilgehäuse angeordnet, wogegen das Vorsteuerventil des Auslassventils mit vertikaler Ausrichtung seiner Betätigungsachse mittig oberhalb der Membran des Auslassventils in dem Ventilgehäuse angeordnet ist.

In einer weiteren Ventileinheit gemäß der DE 40 08 095 A1 sind der Bremsdruckeingang und der Bremsdruckausgang in Einbaulage mit horizontaler Ausrichtung ebenfalls weitgehend axial gegenüberliegend, der Entlüftungsausgang jedoch in etwa mittig vertikal nach unten gerichtet in dem Ventilgehäuse angeordnet. Das Einlassventil ist weitgehend mittig oberhalb des Bremsdruckeingangs und des Bremsdruckausgangs mit vertikaler Ausrichtung seiner Betätigungsachse und horizontaler Ausrichtung seiner Membran in dem Ventilgehäuse angeordnet, wogegen das Auslassventil unterhalb des Bremsdruckausgangs mit vertikaler Ausrichtung seiner Betätigungsachse und horizontaler Ausrichtung seiner Membran in dem Ventilgehäuse angeordnet ist. Das Vorsteuerventil des Einlassventils und das Vorsteuerventil des Auslassventils sind nunmehr mit jeweils vertikaler Ausrichtung ihrer Betätigungsachsen und entgegengesetzten Schaltrichtungen unterhalb des Bremsdruckeingangs radial benachbart zueinander in dem Ventilgehäuse angeordnet.

In der DE 34 08 123 A1 sind zwei Ausführungen von Ventileinheiten beschrieben. Eine erste Ausführungsform der Ventileinheit gemäß der dortigen Fig. 1 entspricht weitgehend der zuvor anhand der DE 40 08 095 A1 beschriebenen Ventileinheit. Bei einer zweiten Ventileinheit gemäß der dortigen Fig. 2 sind der Bremsdruckeingang und der Bremsdruckausgang in Einbaulage mit horizontaler Ausrichtung weitgehend axial gegenüberliegend, der Bremsdruckausgang jedoch tiefer als der Bremsdruckeingang in dem Ventilgehäuse angeordnet. Der Entlüftungsausgang ist in etwa mittig vertikal nach unten gerichtet in dem Ventilgehäuse angeordnet. Das Einlassventil und das Auslassventil sind in etwa auf Höhe des Bremsdruckeingangs und des Bremsdruckausgangs mit horizontaler Ausrichtung ihrer Betätigungsachsen und vertikaler Ausrichtung ihrer Membranen rechtwinklig zu dem Bremsdruckeingang und dem Bremsdruckausgang in der Höhe versetzt zueinander axial gegenüberliegend in dem Ventilgehäuse angeordnet. Das Vorsteuerventil des Einlassventils und das Vorsteuerventil des Auslassventils sind mit jeweils vertikaler Ausrichtung ihrer Betätigungsachsen und entgegengesetzter Schaltrichtung unterhalb des jeweils zugeordneten Membranventils in dem Ventilgehäuse angeordnet.

Bei einer weiteren, aus der DE 38 25 549 A1 bekannten Ventileinheit sind der Bremsdruckeingang und der Bremsdruckausgang in Einbaulage mit horizontaler Ausrichtung axial gegenüberliegend und der Entlüftungsausgang mit horizontaler Ausrichtung oberhalb des Bremsdruckeingangs in dem Ventilgehäuse angeordnet. Das Einlassventil ist oberhalb des Bremsdruckeingangs mit horizontaler Ausrichtung seiner Betätigungsachse und vertikaler Ausrichtung seiner Membran in dem Ventilgehäuse angeordnet, wogegen das Auslassventil oberhalb des Bremsdruckausgangs mit horizontaler Ausrichtung seiner Betätigungsachse und vertikaler Ausrichtung seiner Membran koaxial zu dem Einlassventil in dem Ventilgehäuse angeordnet ist. Das Vorsteuerventil des Einlassventils und das Vorsteuerventil des Auslassventils sind mit jeweils horizontaler Ausrichtung ihrer Betätigungsachsen und entgegengesetzten Schaltrichtungen weitgehend mittig oberhalb der Membranen des Einlassventils und des Auslassventils radial benachbart zueinander in dem Ventilgehäuse angeordnet.

Aufgrund der Anordnung der Drucklufteingänge und Druckluftausgänge, der Einlassventile und Auslassventile, sowie der Vorsteuerventile, ist bei den vorgenannten Ventileinheiten eine mehrteilige Ausführung und eine aufwendige mechanische Bearbeitung des Ventilgehäuses erforderlich. Besonders die jeweilige Anordnung der Membranen des Einlassventils und des Auslassventils in unterschiedlichen Membranebenen erfordert ein mehrfaches Umspannen der Gehäuseteile zur mechanischen Bearbeitung der Ventilsitze und der Kanalränder beziehungsweise Kammerränder, zwischen denen die Membranen eingespannt werden. Zur Verringerung des Herstellungsaufwands sind daher bereits Ventileinheiten vorgeschlagen worden, bei denen die Membranventile mit parallelen Betätigungsachsen und einer Anordnung der Membranen in einer gemeinsamen, weitgehend einer Teilungsebene zwischen zwei Gehäuseteilen entsprechenden Membranebene angeordnet sind.

Eine derartige Ventileinheit ist beispielsweise in der DE 25 17 571 A1 beschrieben. Bei dieser bekannten Ventileinheit ist ein längliches Ventilgehäuse mit einer in Einbaulage horizontalen Teilungsebene in ein Gehäuseunterteil und ein Gehäuseoberteil unterteilt. Der Bremsdruckeingang und der Entlüftungsausgang sind in Längsrichtung mit horizontaler Ausrichtung weitgehend axial gegenüberliegend und der Bremsdruckausgang mit ebenfalls horizontaler Ausrichtung weitgehend mittig rechtwinkelig dazu in dem Gehäuseunterteil angeordnet. Die Membranventile sind in dem Gehäuseunterteil zwischen dem Bremsdruckeingang und dem Entlüftungsausgang mit parallelen Betätigungsachsen und einer Anordnung der Membranen in einer gemeinsamen, weitgehend der Teilungsebene entsprechenden Membranebene unter Einspannung zwischen dem Gehäuseunterteil und dem Gehäuseoberteil in Längsrichtung des Ventilgehäuses in Längsrichtung hintereinander angeordnet. Das Vorsteuerventil des Einlassventils und das Vorsteuerventil des Auslassventils sind mit jeweils vertikaler Ausrichtung ihrer Betätigungsachsen und gleichen Schaltrichtungen oberhalb des jeweils zugeordneten Membranventils radial benachbart zueinander in dem Gehäuseoberteil angeordnet, wodurch die Bauhöhe des Gehäuseoberteils und damit der gesamten Ventileinheit relativ groß ist.

Bei einer weiteren, aus der EP 0 498 584 B1 bekannten derartigen Ventileinheit ist das Ventilgehäuse mit einer in Einbaulage vertikalen Teilungsebene in ein Eingangsgehäuse und ein Ausgangsgehäuse unterteilt. Der Bremsdruckeingang ist mit horizontaler Ausrichtung oben in dem Eingangsgehäuse angeordnet. Der Bremsdruckausgang ist mit horizontaler Ausrichtung dem Bremsdruckeingang weitgehend axial gegenüberliegend in dem Ausgangsgehäuse angeordnet, wogegen der Entlüftungsausgang vertikal nach unten gerichtet in dem Ausgangsgehäuse angeordnet ist. Die Membranventile sind in dem Ausgangsgehäuse zwischen dem Bremsdruckausgang und dem Entlüftungsausgang mit parallelen Betätigungsachsen und einer Anordnung der Membranen in einer gemeinsamen, weitgehend der Teilungsebene entsprechenden Membranebene unter Einspannung zwischen dem Ausgangsgehäuse und dem Eingangsgehäuse vertikal übereinander angeordnet. Das Vorsteuerventil des Einlassventils und das Vorsteuerventil des Auslassventils sind mit jeweils horizontaler Ausrichtung ihrer Betätigungsachsen und entgegengesetzten Schaltrichtungen in etwa mittig rechtwinkelig zu den Drucklufteingängen und Druckluftausgängen sowie parallel zu der Teilungsebene radial benachbart zueinander in dem Eingangsgehäuse angeordnet. Die Magnetspulen der Vorsteuerventile sind in einem Magnetblock angeordnet, der zusammen mit den eingesetzten mechanischen Bauteilen der Magnetventile zwischen einem Gehäuseoberteil und einem Gehäuseunterteil des Eingangsgehäuses angeordnet ist. Zur Abdichtung sind zwischen dem Magnetblock, den Ventilblöcken und den Ventilsitzen der Magnetventile einerseits und dem Gehäuseoberteil und dem Gehäuseunterteil des Eingangsgehäuses andererseits Dichtungen beziehungsweise Dichtringe angeordnet. Zur Fixierung des Gehäuseoberteils und des Gehäuseunterteils mit dem Magnetblock der Magnetventile einerseits sowie der Einspannung der Membranen der Membranventile andererseits sind das Gehäuseoberteil und das Gehäuseunterteil des Eingangsgehäuses jeweils mit dem Ausgangsgehäuse verschraubt. Die Ventileinheit besteht somit aus sehr vielen Bauteilen, die relativ schwierig zu montieren sind. Die Herstellung und Montage dieser bekannten Ventileinheit ist daher vergleichsweise kompliziert und aufwendig.

Schließlich ist in der DE 10 2008 028 439 B3 eine derartige Ventileinheit beschrieben, bei der ein längliches Ventilgehäuse mit in Einbaulage weitgehend horizontalen Teilungsebenen in ein Gehäuseunterteil, ein Gehäuseoberteil sowie eine dazwischen angeordnete Zwischenplatte unterteilt ist. Der Bremsdruckeingang, der Bremsdruckeingang und der Entlüftungsausgang sind mit jeweils horizontaler Ausrichtung in dem Gehäuseunterteil angeordnet. Die Membranventile sind in dem Gehäuseunterteil mit parallelen Betätigungsachsen und einer Anordnung der Membranen in einer gemeinsamen, weitgehend der Teilungsebene zwischen dem Gehäuseunterteil und der Zwischenplatte entsprechenden Membranebene unter Einspannung zwischen dem Gehäuseunterteil und der Zwischenplatte in Längsrichtung hintereinander angeordnet. Das Vorsteuerventil des Einlassventils und das Vorsteuerventil des Auslassventils sind mit jeweils vertikaler Ausrichtung ihrer Betätigungsachsen und gleichen Schaltrichtungen in etwa mittig oberhalb der Membranventile radial benachbart zueinander in dem Gehäuseoberteil angeordnet, wodurch die Bauhöhe des Gehäuseoberteils und damit der gesamten Ventileinheit relativ groß ist. Die Zwischenplatte ist mit dem Gehäuseunterteil verschraubt. Das Gehäuseoberteil ist über einen äußeren Deckel mit der Zwischenplatte oder dem Gehäuseunterteil verschraubt. In der Teilungsebene zwischen dem Gehäuseoberteil und der Zwischenplatte sind Dichtungen angeordnet. Auch diese Ventileinheit besteht somit aus sehr vielen Bauteilen, die allerdings relativ einfach von oben montierbar sind. Dennoch wird die Herstellung und Montage dieser bekannten Ventileinheit als vergleichsweise aufwendig zu beurteilt.

Die EP 0 439 303 A1 gibt an zu offenbaren: In einer Druckluft-Druckmodulatorventilvorrichtung zwei vorsteuerdruckbetätigbare Ventile, über die ein Drucklieferanschluss alternativ mit einem Versorgungsdruckanschluss oder mit einer Auslassöffnung verbindbar ist, wobei ein unabhängiger Einwegflussweg bereitgestellt wird, der es ermöglicht, dass Luft unter Druck vom Versorgungsanschluss zum Lieferanschluss fließen kann, obwohl ein übermäßiger Versorgungsdruck, der das Öffnen des jeweiligen vorsteuerdruckbetätigbaren Ventils verhindern kann, auf das jeweilige Vorsteuerventil wirkt.

Die EP 0 539 770 A1 gibt an zu beschreiben: Eine elektrohydraulische Druckregeleinrichtung mit magnetspulenbetätigbaren Hydraulikventilen an einem Ventilaufnahmekörper, die nahezu vollständig von einer Korrosionsschutzschicht umgeben ist, die als Trägergehäuse ausgebildet sein kann.

Die WO 2008/034524 A1 gibt an zu beschreiben: Ein zweistufiges Magnetventil für eine elektropneumatische Ventilsteuereinheit, das mindestens ein Spulensystem umfasst, an das eine erste und zweite Stromstärke angelegt werden kann, sowie eine in dem Spulensystem untergebrachte Magnetventilvorrichtung mit einer Primärseite zum Anschluss an eine erste Druckluftversorgung und einer Sekundärseite zum Anschluss an eine zweite Druckluftversorgung. Auf der Primärseite ist ein Primärventil mit einem einstellbaren und mittels einer Primärankerfeder vorgespannten Primäranker vorgesehen, während auf der Sekundärseite ein Sekundärventil mit einem einstellbaren und mittels einer Sekundärankerfeder vorgespannten Sekundäranker vorgesehen ist. Die Magnetventileinrichtung (8) ist als eine von einer Seite einzusetzende Ventilpatrone ausgebildet.

Die DE 27 33 883 A1 gibt an zu beschreiben: Ein Bremssystem mit zwei getrennten Steuerventilen, die miteinander verbunden, hintereinander in einer Leitung zwischen einer Druckmittelquelle und einer Bremse angeordnet und unabhängig voneinander betätigbar sind. Das in Strömungsrichtung hintere Ventil wird von einer Bypassanordnung umgangen, die eine direkte, gedrosselte Verbindung zwischen dem vorderen Ventil und der Bremse herstellt.

Den vorliegenden Erfindungen liegt die Aufgabe zugrunde, eine Ventileinheit der eingangs genannten Bauart zur Druckmodulation in einer Druckluft-Bremsanlage vorzuschlagen, die kompakt sowie aus wenigen Bauteilen aufgebaut ist, und die gute Steuerungseigenschaften, insbesondere kurze Schaltzeiten der Membranventile aufweist.

Diese Aufgabe ist in Verbindung mit den Merkmalen der Oberbegriffe der Ansprüche 1 und 4 dadurch gelöst, dass das Vorsteuerventil des Einlassventils und das Vorsteuerventil des Auslassventils in Längsrichtung und mit paralleler Ausrichtung ihrer Betätigungsachsen zu der Teilungsebene des Ventilgehäuses weitgehend mittig über den Membranen des Einlassventils und des Auslassventils in dem Gehäusedeckel angeordnet sind, und dass der Deckel des Ventilgehäuses ein zentrales, mit Ventilbohrungen und Steuerkanälen versehenes Einlegeteil aufweist, in das die Magnetspulen und die mechanischen Bauteile der Vorsteuerventile eingesetzt sind, und das mit einem Kunststoff umspritzt ist.

Die beiden Erfindungen gehen demnach von einer an sich bekannten Ventileinheit zur Druckmodulation in einer Druckluft-Bremsanlage aus, die einen Bremsdruckeingang, einen Bremsdruckausgang und einen Entlüftungsausgang sowie ein als Membranventil ausgebildetes Einlassventil, ein als Membranventil ausgebildetes Auslassventil und jeweils ein als 3/2-Wege-Magnetventil ausgebildetes Vorsteuerventil für jedes der beiden Membranventile aufweist. Die Drucklufteingänge und Druckluftausgänge sowie die Membranventile und Magnetventile sind in einem länglichen Ventilgehäuse angeordnet, das mit einer in Einbaulage weitgehend horizontalen Teilungsebene in ein Basisgehäuse und einen Gehäusedeckel unterteilt ist. Der Bremsdruckeingang, der Bremsdruckausgang und der Entlüftungsausgang sind in dem Basisgehäuse angeordnet. Die Membranventile sind in dem Basisgehäuse zwischen dem Bremsdruckeingang und dem Bremsdruckausgang mit parallelen Betätigungsachsen und einer Anordnung der Membranen in einer gemeinsamen, weitgehend der Teilungsebene entsprechenden Membranebene unter Einspannung zwischen dem Basisgehäuse und dem Gehäusedeckel in Längsrichtung hintereinander angeordnet. Die Vorsteuerventile sind dagegen in dem Gehäusedeckel angeordnet.

Gemäß den Erfindungen ist bei dieser Ventileinheit zusätzlich vorgesehen, dass das Vorsteuerventil des Einlassventils und das Vorsteuerventil des Auslassventils in Längsrichtung mit paralleler Ausrichtung ihrer Betätigungsachsen zu der Teilungsebene weitgehend mittig über den Membranen des Einlassventils und des Auslassventils in dem Gehäusedeckel angeordnet sind, und dass der Gehäusedeckel ein zentrales, mit Ventilbohrungen und Steuerkanälen versehenes Einlegeteil aufweist, in das die Magnetspulen und die mechanischen Bauteile der Vorsteuerventile, wie der jeweilige Ventilkern, der jeweilige Ventilanker und die jeweilige Ventilfeder, eingesetzt sind, und das mit einem Kunststoff umspritzt ist.

Durch die in Einbaulage der Ventileinheit liegende, also in Längsrichtung zu der Teilungsebene des Ventilgehäuses parallele Anordnung der Vorsteuerventile, ergeben sich eine sehr niedrige Bauhöhe des Ventildeckels und damit besonders kompakte Abmessungen der gesamten Ventileinheit. Dies ist besonders vorteilhaft, da derartige Ventileinheiten zur Erzielung einer kurzen Reaktionszeit der betreffenden Radbremsen bei der Steuerung der Blockierschutzfunktionen möglichst nah an den zugeordneten Radbremszylindern angeordnet werden, und der dort verfügbare Bauraum meistens gering ist. Durch die Umspritzung des die Magnetspulen und die mechanischen Bauteile der Vorsteuerventile enthaltenden Einlegeteils wird die Montage der Ventileinheit sowie deren Revision, bei der insbesondere die Membranen des Einlassventils und des Auslassventils durch neue Exemplare ersetzt werden, wesentlich vereinfacht. Außerdem sind die beiden Magnetventile durch ihre Anordnung in dem Einlegeteil besonders gut gegen schädliche Umwelteinflüsse von außen geschützt.

Die Vorsteuerventile sind gemäß der ersten Erfindung als separate Magnetventile ausgebildet, die vorteilhaft mit entgegengesetzter Schaltrichtung und jeweils der Membran des zugeordneten Einlassventils oder Auslassventils zugewandtem Ventilsitz achsparallel und radial benachbart zueinander in dem Einlegeteil angeordnet sind. Durch diese Ausrichtung der Magnetventile ergeben sich für beide Vorsteuerventile besonders kleine, beim Umschalten zu belüftende oder zu entlüftende Pilotvolumina. Dies hat vorteilhaft besonders kurze Schaltreaktionszeiten der Membranventile beim Umschalten der Magnetventile zur Folge.

Zur Vereinfachung der Montage besteht das Einlegeteil gemäß einer vorteilhaften Ausführungsform aus zwei Teilen, welche die Magnetspulen und die mechanischen Bauteile der Magnetventile stirnseitig umfassen.

Eine weitere Montageerleichterung und eine Funktionsverbesserung der Vorsteuerventile kann dadurch erzielt werden, dass die mechanischen Bauteile der Magnetventile jeweils in einer Ventilpatrone zusammengefasst sind.

Gemäß der zweiten Erfindung sind alternativ zu einer Einzelausführung der Magnetventile die Vorsteuerventile auch in einem Doppelankermagnetventil mit einer gemeinsamen Magnetspule zusammengefasst sein, in dem die einzelnen Magnetventile mit entgegengesetzter Schaltrichtung und jeweils der Membran des zugeordneten Einlass- oder Auslassventils zugewandtem Ventilsitz koaxial und axial benachbart zueinander in dem Einlegeteil angeordnet sind.

Die Magnetspule des Doppelankermagnetventils kann mit einem niedrigen und einem hohen elektrischen Strom bestrombar ausgebildet sein, wobei die Vorsteuerventile derart ausgebildet sind, dass das dem Einlassventil zugeordnete Magnetventil durch eine Bestromung der Magnetspule mit dem niedrigen Strom umgeschaltet wird, wogegen das dem Auslassventil zugeordnete Magnetventil erst durch eine Bestromung der Magnetspule mit dem hohen Strom umgeschaltet wird.

Alternativ dazu kann die Magnetspule des Doppelankermagnetventils einen Mittelabgriff zur Teilbestromung aufweisen, wobei die Vorsteuerventile derart ausgebildet sind, dass das dem Einlassventil zugeordnete Magnetventil durch eine Teilbestromung der Magnetspule umgeschaltet wird, wogegen das dem Auslassventil zugeordnete Magnetventil erst durch eine Vollbestromung der Magnetspule umgeschaltet wird.

Die vorgenannte Schaltcharakteristik des Doppelankermagnetventils wird weitgehend dadurch erreicht, dass für das dem Einlassventil zugeordnete Vorsteuerventil eine Ventilfeder mit entsprechend niedriger Federsteifigkeit und für das dem Auslassventil zugeordnete Vorsteuerventil eine Ventilfeder mit entsprechend hoher Federsteifigkeit gewählt wird.

Auch bei dieser Ausführungsform der Vorsteuerventile besteht das Einlegeteil zur Vereinfachung der Montage vorzugsweise aus zwei Teilen, welche die Magnetspule und die mechanischen Bauteile des Doppelankermagnetventils stirnseitig umfassen. Eine weitere Montageerleichterung und eine Funktionsverbesserung der Vorsteuerventile kann dadurch erzielt werden, dass die mechanischen Bauteile des Doppelankermagnetventils in einer Ventilpatrone zusammengefasst sind.

Bei den beiden genannten Ausführungsvarianten der Vorsteuerventile reicht das Einlegeteil des Gehäusedeckels zur Stabilisierung des Gehäusedeckels bevorzugt bis an die Teilungsebene des Ventilgehäuses heran und begrenzt die Steuerkammern der Membranventile zumindest teilweise.

Da die Steuerkammern der Membranventile zeitweise mit dem hohen, am Bremsdruckeingang entnommenen Steuerdruck beaufschlagt werden, kann es nahe der Steuerkammern zu Dichtigkeitsproblemen in der Kontaktfläche zwischen dem Einlegeteil und der Umspritzung kommen. Derartige Dichtigkeitsprobleme können aber dadurch vermieden werden, dass in dem Gehäusedeckel zumindest nahe der Steuerkammern der Membranventile Dichtelemente zwischen dem Einlegeteil und der Umspritzung angeordnet sind. Die Dichtelemente können beispielsweise als in Quernuten des Einlegeteils eingelegte Dichtungsleisten ausgebildet sein, die zusammen mit dem Einlegeteil außen mit dem Kunststoff umspritzt werden.

Dichtigkeitsprobleme im Bereich der Steuerkammern der Membranventile können aber auch ohne besonderen Aufwand dadurch vermieden werden, dass das Einlegeteil des Gehäusedeckels bis an die Teilungsebene des Ventilgehäuses heranreicht und die Steuerkammern der Membranventile vollständig überdeckend begrenzt.

Die Anschlusskabel der Magnetspulen sind zweckmäßig innerhalb der Umspritzung des Gehäusedeckels verlegt und enden vorteilhaft in einer mit der Umspritzung angeformten Anschlussbuchse. Hierdurch sind die Anschlusskabel der Magnetspulen zum einen optimal gegen Beschädigungen geschützt. Zum anderen besteht dadurch die Möglichkeit, die Anschlussbuchse der Magnetspulen entsprechend der Anforderung des jeweiligen Fahrzeugherstellers flexibel, also bedarfsweise mit unterschiedlicher Buchsenform und unterschiedlicher Ausrichtung, an verschiedenen Orten des Gehäusedeckels anzuordnen.

Schließlich kann vorgesehen sein, dass der Bremsdruckeingang und der Bremsdruckausgang mit horizontaler Ausrichtung in einer Längsrichtung weitgehend axial gegenüberliegend sowie der Entlüftungsausgang dazwischen vertikal nach unten gerichtet in dem Basisgehäuse angeordnet sind.

Zur weiteren Verdeutlichung der Erfindung ist der Beschreibung eine Zeichnung mit mehreren Ausführungsbeispielen beigefügt. In dieser zeigt
Fig. 1 eine erste Ausführungsform der erfindungsgemäßen Ventileinheit in einem ersten vertikalen Längsschnitt,
Fig. 2 die erste Ausführungsform der Ventileinheit in einem zweiten vertikalen Längsschnitt,
Fig. 3 die erste Ausführungsform der Ventileinheit in einem Horizontalschnitt,
Fig. 4 eine zweite Ausführungsform der Ventileinheit in einem ersten vertikalen Längsschnitt,
Fig. 5 die zweite Ausführungsform der Ventileinheit in einem zweiten vertikalen Längsschnitt, und
Fig. 6 eine dritte Ausführungsform der Ventileinheit in einem Horizontalschnitt.

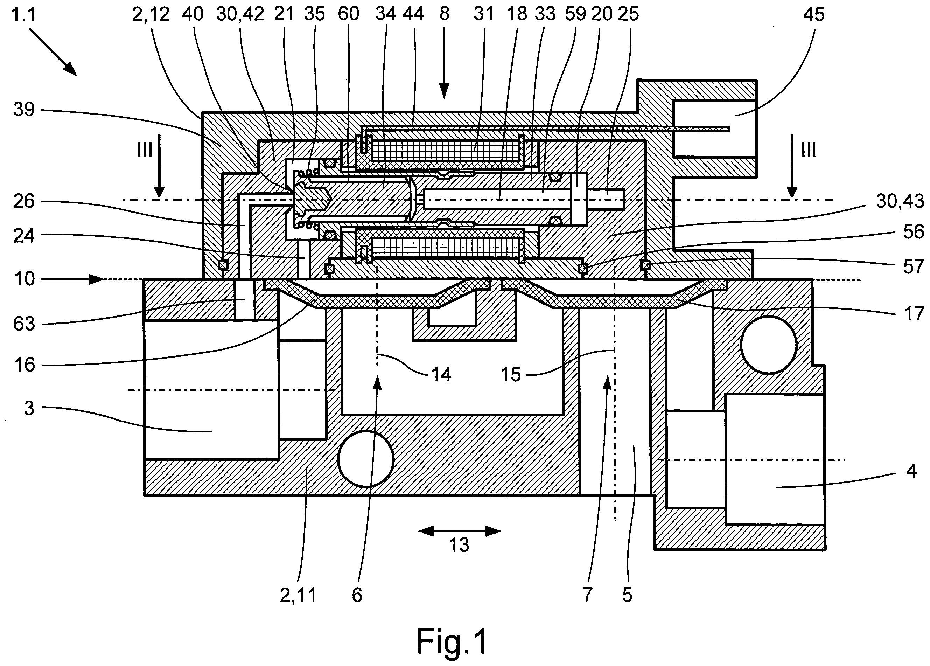

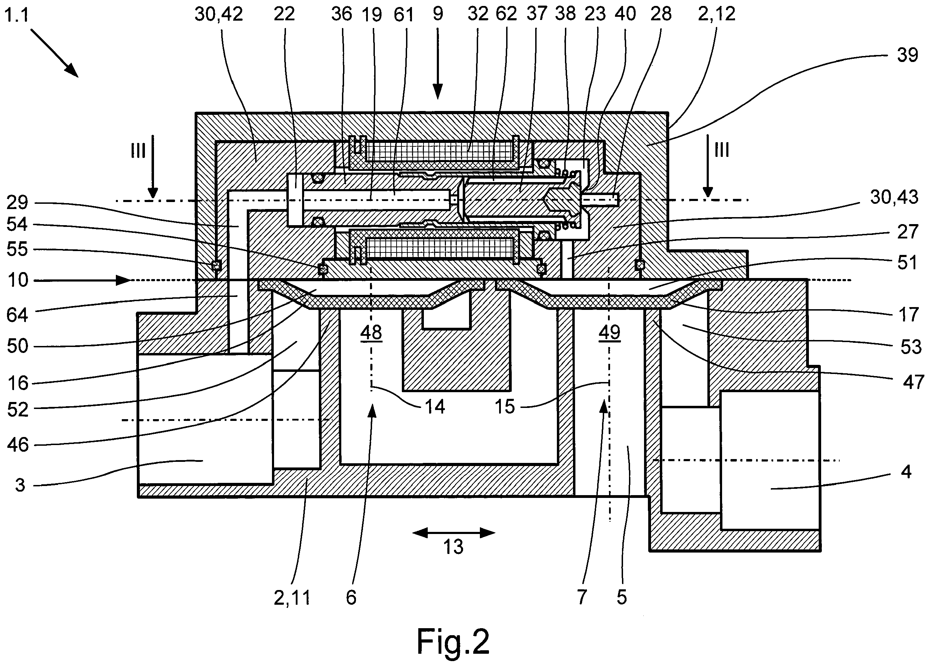

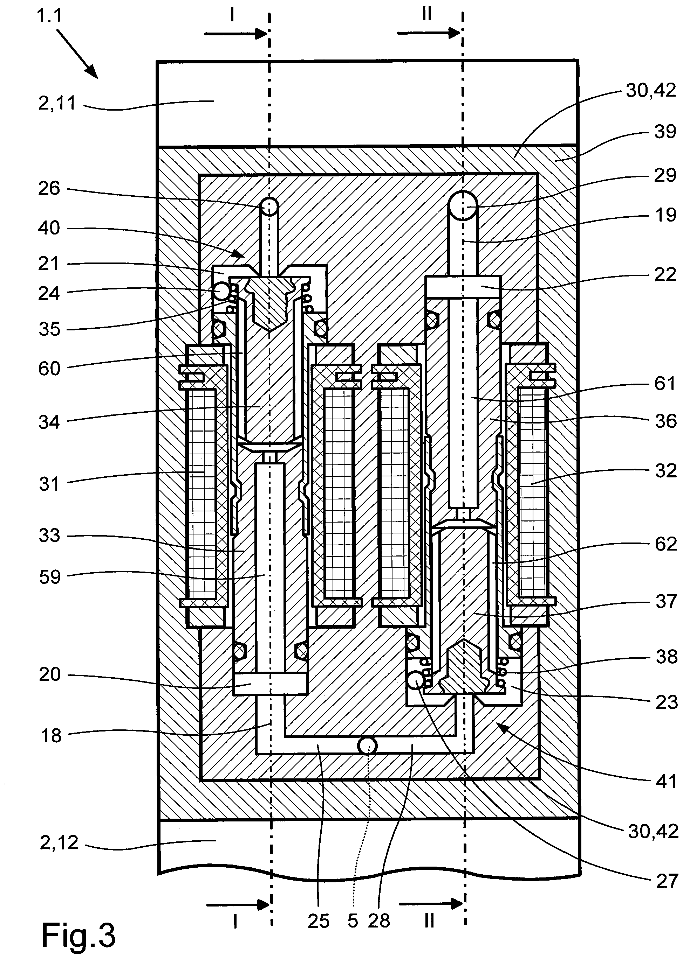

Die erste Ausführungsform der erfindungsgemäßen Ventileinheit 1.1 ist in Fig. 1 in einem ersten vertikalen Längsschnitt I - I gemäß Fig. 3, in Fig. 2 in einem zweiten vertikalen Längsschnitt II - II gemäß Fig. 3, und in Fig. 3 in einem Horizontalschnitt III - III gemäß Fig. 1 und Fig. 2 abgebildet.

In einem länglichen Ventilgehäuse 2 sind ein Bremsdruckeingang 3, ein Bremsdruckausgang 4 und ein Entlüftungsausgang 5 ausgebildet, sowie ein als Membranventil ausgebildetes Einlassventil 6, ein als Membranventil ausgebildetes Auslassventil 7 und jeweils ein als 3/2-Wege-Magnetventil ausgebildetes Vorsteuerventil 8, 9 für jedes Membranventil 6, 7 angeordnet. Das Ventilgehäuse 2 ist mit einer in Einbaulage weitgehend horizontalen Teilungsebene 10 in ein Basisgehäuse 11 und einen Gehäusedeckel 12 unterteilt, die über eine Flanschverschraubung oder in anderer Weise miteinander verbunden sein können. Der Bremsdruckeingang 3 und der Bremsdruckausgang 4 sind in Längsrichtung 13 des Ventilgehäuses 2 mit horizontaler Ausrichtung weitgehend axial gegenüberliegend und der Entlüftungsausgang 5 dazwischen vertikal nach unten gerichtet in dem Basisgehäuse 11 angeordnet. Die Membranventile 6, 7 sind in dem Basisgehäuse 11 zwischen dem Bremsdruckeingang 3 und dem Bremsdruckausgang 4 mit parallelen Betätigungsachsen 14, 15 und einer Anordnung der Membranen 16, 17 in einer gemeinsamen, weitgehend der Teilungsebene 10 entsprechenden Membranebene unter Einspannung zwischen dem Basisgehäuse 11 und dem Gehäusedeckel 12 in Längsrichtung 13 hintereinander angeordnet. Die Vorsteuerventile 8, 9 sind dagegen in dem Gehäusedeckel 12 angeordnet.

Gemäß der Erfindung sind das Vorsteuerventil 8 des Einlassventils 6 und das Vorsteuerventil 9 des Auslassventils 7 in Längsrichtung 13 mit paralleler Ausrichtung ihrer Betätigungsachsen 18, 19 zu der Teilungsebene 10 weitgehend mittig über den Membranen 16, 17 des Einlassventils 6 und des Auslassventils 7 in dem Gehäusedeckel 12 angeordnet. Der Gehäusedeckel 12 weist ein zentrales, mit Ventilbohrungen 20, 21; 22, 23 und Steuerkanälen 24, 25, 26; 27, 28, 29 versehenes Einlegeteil 30 auf, in das die Magnetspulen 31, 32 und die mechanischen Bauteile der Vorsteuerventile 8, 9, wie der jeweilige Ventilkern 33, 36, der jeweilige Ventilanker 34, 37 und die jeweilige Ventilfeder 35, 38, eingesetzt sind, und das mit einem Kunststoff 39 außenseitig umspritzt ist.

Vorliegend sind die beiden Vorsteuerventile 8, 9 als separate Magnetventile ausgeführt, die mit entgegengesetzter Schaltrichtung und jeweils der Membran 16, 17 des zugeordneten Einlass- oder Auslassventils 6, 7 zugewandtem Ventilsitz 40, 41 achsparallel und radial benachbart zueinander in dem Einlegeteil 30 angeordnet sind. Das Einlegeteil 30 besteht hier aus einem eingangseitigen Teil 42 und einem ausgangsseitigen Teil 43, welche die beiden Magnetspulen 31, 32 und die mechanischen Bauteile 33 - 35; 36 - 38 der Magnetventile 8, 9 stirnseitig umfassen. Innerhalb der Umspritzung 39 des Gehäusedeckels 12 sind Anschlusskabel 44 der Magnetspulen 31, 32 verlegt, die in einer mit der Umspritzung 39 angeformten Anschlussbuchse 45 enden.

Die Membranen 16, 17 des Einlassventils 6 und des Auslassventils 7 liegen aufgrund ihrer Formgebung jeweils an einem Ventilsitz 46, 47 eines zylindrischen Zentralkanals 48, 49 an, der jeweils durch die Beaufschlagung einer zwischen der betreffenden Membran 16, 17 und dem Gehäusedeckel 12 angeordneten Steuerkammer 50, 51 mit einem niedrigen oder hohen Steuerdruck mit einem koaxial zu diesem angeordneten zylindrischen Ringkanal 52, 53 verbindbar oder gegenüber diesem absperrbar ist. Der zylindrische Ringkanal 52 des Einlassventils 6 ist mit dem Bremsdruckeingang 3 verbunden. Der Zentralkanal 48 des Einlassventils 6 steht mit dem zylindrischen Ringkanal 53 des Auslassventils 7 in Verbindung, der wiederum mit dem Bremsdruckausgang 4 verbunden ist. Der Zentralkanal 49 des Auslassventils 7 ist mit dem Entlüftungsausgang 5 verbunden. Somit ist der Bremsdruckausgang 4 über das Einlassventil 6 wechselweise mit dem Bremsdruckeingang 3 verbindbar oder gegenüber diesem absperrbar.
Ebenso ist der Bremsdruckausgang 4 über das Auslassventil 7 wechselweise mit dem Entlüftungsausgang 5 verbindbar oder gegenüber diesem absperrbar.

In der Ausführungsform der Ventileinheit 1.1 gemäß den Figuren 1 bis 3 reicht das Einlegeteil 30 des Gehäusedeckels 12 bis an die Teilungsebene 10 zwischen dem Basisgehäuse 11 und dem Gehäusedeckel 12 heran, begrenzt die Steuerkammern 50, 51 der beiden Membranventile 8, 9 aber nur teilweise. Zur Vermeidung von Dichtigkeitsproblemen sind daher in dem Gehäusedeckel 12 nahe der beiden Steuerkammern 50, 51 Dichtelemente 54, 55, 56, 57 zwischen dem Einlegeteil 30 und der Umspritzung 39 aus Kunststoff angeordnet. Vorliegend sind die angesprochenen Dichtelemente 54, 55, 56, 57 beispielhaft als in Quernuten des Einlegeteils 30 eingelegte Dichtungsleisten ausgebildet, die zusammen mit dem Einlegeteil 30 mit dem Kunststoff 33 umspritzt sind.

Die Ventileinheit 1.1 gemäß den Figuren 1 bis 3 weist die Schaltfunktionen "Druckaufbau", "Druckhalten" und "Druckabbau" auf. In der Schaltfunktion "Druckaufbau" der Ventileinheit 1.1 sind das Einlassventil 6 geöffnet und das Auslassventil 7 geschlossen, so dass der über ein Bremsventil am Bremsdruckeingang 3 eingesteuerte Bremsdruck unverändert an den Bremsdruckausgang 4 und an mindestens einen daran angeschlossenen Radbremszylinder weitergeleitet wird. Da die Schaltfunktion "Druckaufbau" dem Ruhezustand der Ventileinheit 1.1 entspricht, verbindet das Vorsteuerventil 8 des Einlassventils 6 im unbestromten Zustand seiner Magnetspule 31 die Steuerkammer 50 des Einlassventils 6 über den Steuerkanal 24, die Ventilbohrung 21, Längsnuten 60 in dem Ventilanker 34, und eine Zentralbohrung 59 in dem Ventilkern 33 mit einem einen niedrigen Steuerdruck führenden Steuerkanal 25, der in nicht dargestellter Weise an den Entlüftungsausgang 5 angeschlossen ist. Die in Fig. 1 und Fig. 2 aufgrund ihrer Formgebung an dem Ventilsitz 46 des Einlassventils 6 anliegend dargestellte Membran 16 wird in dieser Betriebssituation durch einen in dem Ringkanal 52 vorliegenden Bremsdruck in Richtung zu der Steuerkammer 50 verschoben, wodurch das Einlassventil 6 geöffnet wird.

Ebenso verbindet das Vorsteuerventil 9 des Auslassventils 7 im unbestromten Zustand seiner Magnetspule 32 die Steuerkammer 51 des Auslassventils 7 über den Steuerkanal 27, die Ventilbohrung 23, Längsnuten 62 in dem Ventilanker 37, und eine Zentralbohrung 61 in dem Ventilkern 36 mit einem einen hohen Steuerdruck führenden Steuerkanal 29, der über einen weiteren, in dem Basisgehäuse 11 angeordneten Steuerkanal 64 an den Bremsdruckeingang 3 angeschlossen ist (Fig. 2).

In der Schaltfunktion "Druckhalten" der Ventileinheit 1.1 sind das Einlassventil 6 und das Auslassventil 7 geschlossen, so dass der am Bremsdruckausgang 4 und dem mindestens einen daran angeschlossenen Radbremszylinder anliegende Bremsdruck dann konstant gehalten wird. Zur Einstellung dieser Schaltfunktion wird nur das Vorsteuerventil 8 des Einlassventils 6 durch Bestromung seiner Magnetspule 31 umgeschaltet, wodurch der betreffende Ventilanker 34 entgegen der Rückstellkraft der Ventilfeder 35 axial von dem Ventilsitz 40 nach innen gezogen wird. Dadurch wird die Steuerkammer 50 des Einlassventils 6 über den Steuerkanal 24 und die Ventilbohrung 21 mit einem den hohen Steuerdruck führenden Steuerkanal 26 verbunden, der über einen weiteren, in dem Basisgehäuse 11 angeordneten Steuerkanal 63 an den Bremsdruckeingang 3 angeschlossen ist.

In der Schaltfunktion "Druckabbau" der Ventileinheit 1.1 gemäß Fig. 1 bis 3 sind das Einlassventil 6 geschlossen und das Auslassventil 7 geöffnet, so dass der Bremsdruckausgang 4 und der mindestens eine daran angeschlossene Radbremszylinder dann über den Entlüftungsausgang 5 entlüftet werden. Zur Einstellung dieser Schaltfunktion werden beide Vorsteuerventile 8, 9 durch Bestromung ihrer Magnetspulen 31, 32 umgeschaltet. Durch die Bestromung der Magnetspule 32 des dem Auslassventil 7 zugeordneten Vorsteuerventils 9 wird der betreffende Ventilanker 37 entgegen der Rückstellkraft der Ventilfeder 38 axial von dem Ventilsitz 41 nach innen gezogen, wodurch die Steuerkammer 51 des Auslassventils 7 über den Steuerkanal 27 und die Ventilbohrung 23 mit einem den niedrigen Steuerdruck führenden Steuerkanal 28 verbunden wird, der in nicht dargestellter Weise an den Entlüftungsausgang 5 angeschlossen ist.

Die Schaltfunktionen "Druckhalten" und "Druckabbau" der Ventileinheit 1.1 sind Blockierschutzfunktionen, mit denen ein bremsbedingtes Blockieren des mindestens einen zugeordneten Rades vermieden werden soll. Diese Schaltfunktionen werden durch eine entsprechende Ansteuerung der Vorsteuerventile 8, 9 von einem Steuergerät eines Antiblockiersystems gesteuert, in dem die Signale von Raddrehzahlsensoren zur Erkennung eines bevorstehenden oder schon eingetretenen Blockierens der gebremsten Räder ausgewertet werden.

Durch die in Einbaulage der Ventileinheit 1.1 liegende, also in Längsrichtung 13 zu der Teilungsebene 10 des Ventilgehäuses 2 parallele Anordnung der beiden Vorsteuerventile 8, 9 ergibt sich eine sehr niedrige Bauhöhe des Ventildeckels 12 und damit besonders kompakte Abmessungen der gesamten Ventileinheit 1.1. Dies ist besonders vorteilhaft, da derartige Ventileinheiten 1.1 zur Erzielung einer kurzen Reaktionszeit der betreffenden Radbremsen bei der Steuerung der Blockierschutzfunktionen möglichst nahe an den zugeordneten Radbremszylindern angeordnet werden, und der dort verfügbare Bauraum meistens gering ist.

Durch die Ausrichtung der Magnetventile 8, 9 mit benachbart zu den Membranen 16, 17 beziehungsweise zu den Steuerkammern 50, 51 der zugeordneten Membranventile 6, 7 angeordneten Ventilsitzen 40, 41 ergeben sich für beide Vorsteuerventile 8, 9 besonders kleine, beim Umschalten zu belüftende oder zu entlüftende Pilotvolumina. Dies hat vorteilhaft besonders kurze Schaltreaktionszeiten der Membranventile 6, 7 beim Umschalten der Magnetventile 8, 9 zur Folge.

Durch die Umspritzung 39 des die Magnetspulen 31, 32 und die mechanischen Bauteile 33 - 35, 36 - 38 der Vorsteuerventile 8, 9 enthaltenden Einlegeteils 30 wird die Montage der Ventileinheit 1.1 sowie deren Revision, bei der insbesondere die Membranen 16, 17 der Membranventile 6, 7 durch neue Exemplare ersetzt werden, wesentlich vereinfacht. Zudem kann mit der Umspritzung 39 des Einlegeteils 30 die Anschlussbuchse 45 der Magnetspulen 31, 32 entsprechend der Anforderung des jeweiligen Fahrzeugherstellers flexibel, also bedarfsweise mit unterschiedlicher Buchsenform und unterschiedlicher Ausrichtung, an verschiedenen Orten des Gehäusedeckels 12 angeordnet werden.

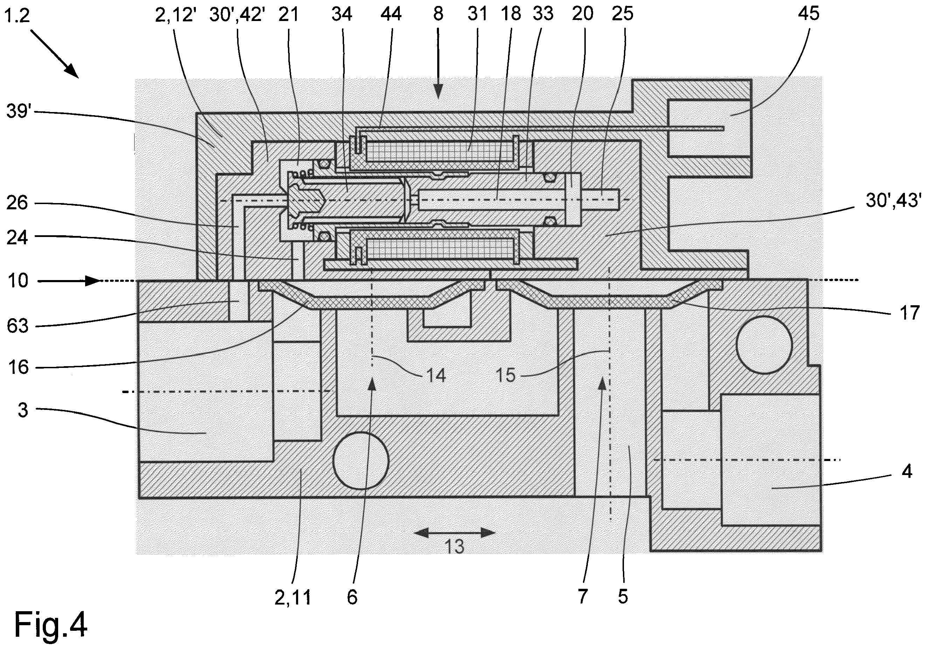

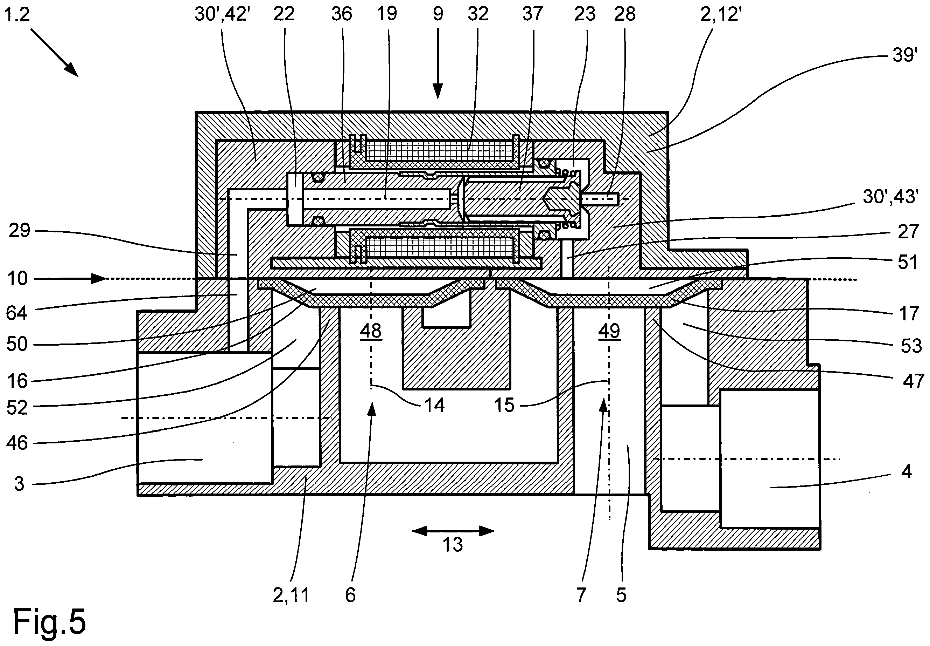

Eine in Fig. 4 in einem mit demjenigen von Fig. 1 vergleichbaren ersten vertikalen Längsschnitt und in Fig. 5 in einem mit demjenigen von Fig. 2 vergleichbaren zweiten vertikalen Längsschnitt abgebildete zweite Ausführungsform der Ventileinheit 1.2 entspricht weitgehend der ersten Ausführungsform der Ventileinheit 1.1 gemäß den Figuren 1 bis 3. Der wesentliche Unterschied der zweiten Ausführungsform der Ventileinheit 1.2 zu der ersten Ausführungsform besteht darin, dass das in dem Gehäusedeckel 12' bis an die Teilungsebene 10 des Ventilgehäuses 2 heranreichende Einlegestück 30' beziehungsweise dessen Teile 42', 43' die Steuerkammern 50, 51 der Membranventile 6, 7 nunmehr vollständig überdeckend begrenzen. Hierdurch kann vorteilhaft auf die bei der ersten Ausführungsform gemäß den Figuren 1 bis 3 zwischen dem Einlegeteil 30 und der Umspritzung 39 vorgesehenen Dichtelemente 54, 55, 56, 57 verzichtet werden.

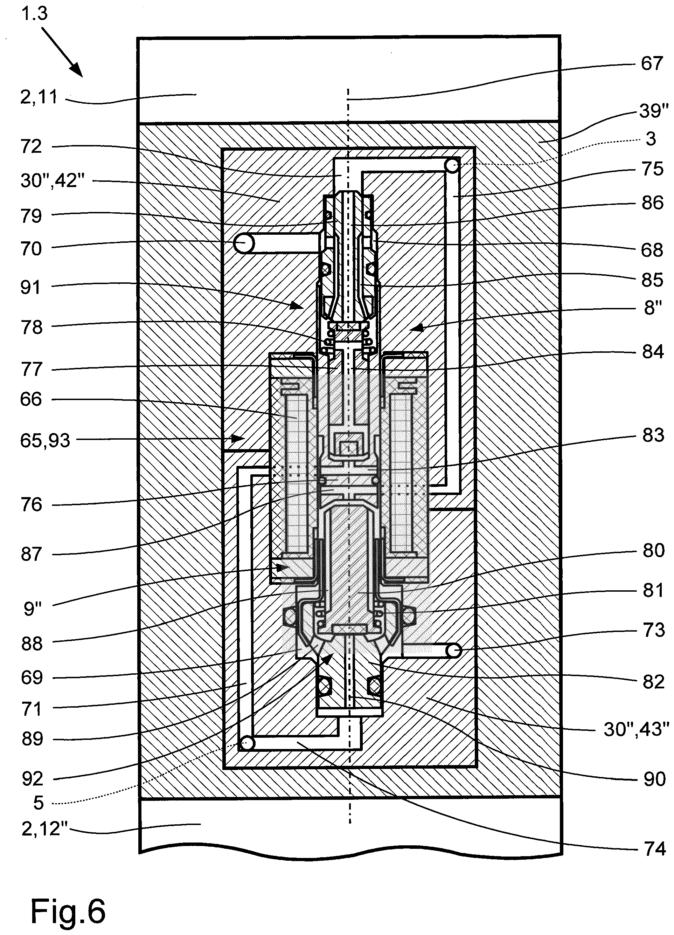

Eine in Fig. 6 in einem mit demjenigen von Fig. 3 vergleichbaren Horizontalschnitt abgebildete dritte Ausführungsform der erfindungsgemäßen Ventileinheit 1.3 unterscheidet sich bei gleicher Funktionsweise von der ersten Ausführungsform der Ventileinheit 1.1 gemäß den Figuren 1 bis 3 und von der zweiten Ausführungsform der Ventileinheit 1.2 gemäß den Figuren 4 und 5 dadurch, dass die beiden Vorsteuerventile 8", 9" nun in einem Doppelankermagnetventil 65 mit einer gemeinsamen Magnetspule 66 zusammengefasst sind. Innerhalb des Doppelankermagnetventils 65 sind die einzelnen Magnetventile 8", 9" mit entgegengesetzter Schaltrichtung und jeweils der Membran 16, 17 des zugeordneten Einlass- oder Auslassventils 6, 7 zugewandtem Ventilsitz 91, 92 koaxial und axial benachbart zueinander in dem Einlegeteil 30" angeordnet.

In der Schaltfunktion "Druckaufbau" der Ventileinheit 1.3, in der das Einlassventil 6 geöffnet und das Auslassventil 7 geschlossen ist, verbindet das Vorsteuerventil 8" des Einlassventils 6 im unbestromten Zustand der Magnetspule 66 die Steuerkammer 50 des Einlassventils 6 über einen Steuerkanal 70, die Ventilbohrung 68, in einem äußeren Ventilkern 79 angeordnete Längsnuten 85, in dem zugeordneten Ventilanker 77 angeordnete Radial- und Zentralbohrungen 84, und in einem zentralen Ventilkern 76 angeordnete Radial- und Zentralbohrungen 83 mit einem einen niedrigen Steuerdruck führenden Steuerkanal 71, der an den Entlüftungsausgang 5 angeschlossen ist. Ebenso verbindet das Vorsteuerventil 9" des Auslassventils 7 im unbestromten Zustand der Magnetspule 66 die Steuerkammer 51 des Auslassventils 7 über einen Steuerkanal 73, die Ventilbohrung 69, in einem äußeren Ventilkern 82 angeordnete Diagonalbohrungen 89, in dem zugeordneten Ventilanker 80 angeordnete Längsnuten 88, und in dem zentralen Ventilkern 76 angeordnete Radial- und Zentralbohrungen 87 mit einem einen hohen Steuerdruck führenden Steuerkanal 75, der an den Bremsdruckeingang 3 angeschlossen ist.

In der Schaltfunktion "Druckhalten" der Ventileinheit 1.3, in der das Einlassventil 6 und das Auslassventil 7 geschlossen sind, wird nur das Vorsteuerventil 8" des Einlassventils 6 durch die Bestromung der Magnetspule 66 mit einem geringen Strom oder, bei vorhandenem Mittelabgriff an der Magnetspule 66, durch eine Teilbestromung der Magnetspule 66 umgeschaltet. Dabei wird der Ventilanker 77 des Vorsteuerventils 8" entgegen der Rückstellkraft der betreffenden Ventilfeder 78 axial von dem Ventilsitz 91 nach innen gezogen. Dadurch wird die Steuerkammer 50 des Einlassventils 6 über den Steuerkanal 70, die Ventilbohrung 68, sowie die in dem äußeren Ventilkern 79 angeordneten Längsnuten 85 und eine Zentralbohrung 86 mit einem den hohen Steuerdruck führenden Steuerkanal 72 verbunden, der zusammen mit dem Steuerkanal 75 des Vorsteuerventils 9" an den Bremsdruckeingang 3 angeschlossen ist.

In der Schaltfunktion "Druckabbau" der Ventileinheit 1.3, in dem das Einlassventil 6 geschlossen und das Auslassventil 7 geöffnet ist, werden beide Vorsteuerventile 8", 9" durch die Bestromung der Magnetspule 66 mit einem hohen Strom oder, bei vorhandenem Mittelabgriff an der Magnetspule 66, durch eine Vollbestromung der Magnetspule 66 umgeschaltet. Beim Umschalten des dem Auslassventil 7 zugeordneten Vorsteuerventils 9" wird der zugeordnete Ventilanker 80 entgegen der Rückstellkraft der betreffenden Ventilfeder 81 axial von dem Ventilsitz 92 nach innen gezogen. Dadurch wird die Steuerkammer 51 des Auslassventils 7 über den Steuerkanal 73, die Ventilbohrung 69 sowie die in dem äußeren Ventilkern 82 angeordneten Diagonalbohrungen 89 und eine Zentralbohrung 90 mit einem den niedrigen Steuerdruck führenden Steuerkanal 74 verbunden, der zusammen mit dem Steuerkanal 71 des Vorsteuerventils 8" an den Entlüftungsausgang 5 angeschlossen ist.

Die stufenweise Betätigung der beiden Vorsteuerventile 8", 9" wird durch eine entsprechend niedrige Federsteifigkeit der Ventilfeder 78 des dem Einlassventil 6 zugeordneten Vorsteuerventils 8" und eine entsprechend hohe Federsteifigkeit der Ventilfeder 81 des dem Auslassventil 7 zugeordneten Vorsteuerventils 9" erreicht.

Zur Montageerleichterung und zur Funktionsverbesserung der beiden Vorsteuerventile 8", 9" sind die mechanischen Bauteile des Doppelankermagnetventils 65, wie der zentrale Ventilkern 76, die Ventilanker 77, 80, die Ventilfedern 78, 81 und die äußeren Ventilkerne 79, 82 vorliegend beispielhaft in einer Ventilpatrone 93 zusammengefasst, die stirnseitig in jeweils eine Ventilbohrung 68, 69 des eingangsseitigen Teils 42" und des ausgangsseitigen Teils 43" des Einlegeteils 30" eingesetzt ist.

### Bezugszeichen (Teil der Beschreibung)

- 1.1: Ventileinheit
- 1.2: Ventileinheit
- 1.3: Ventileinheit
- 2: Ventilgehäuse
- 3: Bremsdruckeingang
- 4: Bremsdruckausgang
- 5: Entlüftungsausgang
- 6: Einlassventil, Membranventil
- 7: Auslassventil, Membranventil
- 8, 8": Vorsteuerventil von 6, Magnetventil
- 9, 9": Vorsteuerventil von 7, Magnetventil
- 10: Teilungsebene
- 11: Basisgehäuse
- 12, 12', 12": Gehäusedeckel
- 13: Längsrichtung des Ventilgehäuses
- 14: Betätigungsachse des Einlassventils 6
- 15: Betätigungsachse des Auslassventils 7
- 16: Membran des Einlassventils 6
- 17: Membran des Auslassventil 7
- 18: Betätigungsachse des Vorsteuerventils 8
- 19: Betätigungsachse des Vorsteuerventils 9
- 20: Ventilbohrung des Vorsteuerventils 8
- 21: Ventilbohrung des Vorsteuerventils 8
- 22: Ventilbohrung des Vorsteuerventils 9
- 23: Ventilbohrung des Vorsteuerventils 9
- 24: Steuerkanal des Vorsteuerventils 8
- 25: Steuerkanal des Vorsteuerventils 8
- 26: Steuerkanal des Vorsteuerventils 8
- 27: Steuerkanal des Vorsteuerventils 9
- 28: Steuerkanal des Vorsteuerventils 9
- 29: Steuerkanal des Vorsteuerventils 9
- 30, 30', 30": Einlegeteil
- 31: Magnetspule des Vorsteuerventils 8
- 32: Magnetspule des Vorsteuerventils 9
- 33: Ventilkern des Vorsteuerventils 8
- 34: Ventilanker des Vorsteuerventils 8
- 35: Ventilfeder des Vorsteuerventils 8
- 36: Ventilkern des Vorsteuerventils 9
- 37: Ventilanker des Vorsteuerventils 9
- 38: Ventilfeder des Vorsteuerventils 9
- 39, 39', 39": Umspritzung, Kunststoff
- 40: Ventilsitz des Vorsteuerventils 8
- 41: Ventilsitz des Vorsteuerventils 9
- 42: Eingangsseitiger Teil des Einlegeteils 30
- 42': Eingangsseitiger Teil des Einlegeteils 30'
- 42": Eingangsseitiger Teil des Einlegeteils 30"
- 43: Ausgangsseitiger Teil des Einlegeteils 30
- 43': Ausgangsseitiger Teil des Einlegeteils 30'
- 43": Ausgangsseitiger Teil des Einlegeteils 30"
- 44: Anschlusskabel
- 45: Anschlussbuchse
- 46: Ventilsitz des Einlassventils 6
- 47: Ventilsitz des Auslassventils 7
- 48: Zentralkanal des Einlassventils 6
- 49: Zentralkanal des Auslassventils 7
- 50: Steuerkammer des Einlassventils 6
- 51: Steuerkammer des Auslassventils 7
- 52: Ringkanal des Einlassventils 6
- 53: Ringkanal des Auslassventils 7
- 54: Dichtelement, Dichtungsleiste
- 55: Dichtelement, Dichtungsleiste
- 56: Dichtelement, Dichtungsleiste
- 57: Dichtelement, Dichtungsleiste
- 59: Zentralbohrung des Ventilkerns 33
- 60: Längsnut des Ventilankers 34
- 61: Zentralbohrung des Ventilkerns 36
- 62: Längsnut des Ventilankers 37
- 63: Steuerkanal des Vorsteuerventils 8
- 64: Steuerkanal des Vorsteuerventils 9
- 65: Doppelankermagnetventil
- 66: Magnetspule von 64
- 67: Betätigungsachse des Vorsteuerventils 8", 9"
- 68: Ventilbohrung des Vorsteuerventils 8"
- 69: Ventilbohrung des Vorsteuerventils 9"
- 70: Steuerkanal des Vorsteuerventils 8"
- 71: Steuerkanal des Vorsteuerventils 8"
- 72: Steuerkanal des Vorsteuerventils 8"
- 73: Steuerkanal des Vorsteuerventils 9"
- 74: Steuerkanal des Vorsteuerventils 9"
- 75: Steuerkanal des Vorsteuerventils 9"
- 76: Zentraler Ventilkern des Vorsteuerventils 8", 9"
- 77: Ventilanker des Vorsteuerventils 8"
- 78: Ventilfeder des Vorsteuerventils 8"
- 79: Äußerer Ventilkern des Vorsteuerventils 8"
- 80: Ventilanker des Vorsteuerventils 9"
- 81: Ventilfeder des Vorsteuerventils 9"
- 82: Äußerer Ventilkern des Vorsteuerventils 9"
- 83: Bohrung im zentralen Ventilkern 76
- 84: Bohrung im Ventilanker 77
- 85: Längsnut im äußeren Ventilkern 79
- 86: Zentralbohrung im äußeren Ventilkern 79
- 87: Bohrung im zentralen Ventilkern 76
- 88: Längsnut im Ventilanker 80
- 89: Diagonalbohrung im äußeren Ventilkern 82
- 90: Zentralbohrung im äußeren Ventilkern 82
- 91: Ventilsitz des Vorsteuerventils 8"
- 92: Ventilsitz des Vorsteuerventils 9"
- 93: Ventilpatrone

## Patentansprüche

1. Ventileinheit (1.1; 1.2) zur Druckmodulation in einer Druckluft-Bremsanlage, mit einem Bremsdruckeingang (3), einem Bremsdruckausgang (4) und einem Entlüftungsausgang (5), sowie mit einem als Membranventil ausgebildeten Einlassventil (6), einem als Membranventil ausgebildeten Auslassventil (7), und mit jeweils einem als 3/2-Wege-Magnetventil ausgebildeten Vorsteuerventil (8, 9) für jedes Membranventil (6, 7), welche in einem länglichen Ventilgehäuse (2) angeordnet sind, das mit einer in Einbaulage weitgehend horizontalen Teilungsebene (10) in ein Basisgehäuse (11) und einen Gehäusedeckel (12, 12') unterteilt ist, wobei der Bremsdruckeingang (3) und der Bremsdruckausgang (4) sowie der Entlüftungsausgang (5) in dem Basisgehäuse (11) angeordnet sind, die Membranventile (6, 7) in dem Basisgehäuse (11) zwischen dem Bremsdruckeingang (3) und dem Bremsdruckausgang (4) mit parallelen Betätigungsachsen (14, 15) und einer Anordnung der Membranen (16, 17) in einer gemeinsamen, weitgehend der Teilungsebene (10) entsprechenden Membranebene unter Einspannung zwischen dem Basisgehäuse (11) und dem Gehäusedeckel (12, 12') in Längsrichtung (13) hintereinander angeordnet sind, die Vorsteuerventile (8, 9) in dem Gehäusedeckel (12, 12') angeordnet sind, **dadurch gekennzeichnet, dass** das Vorsteuerventil (8) des Einlassventils (6) und das Vorsteuerventil (9) des Auslassventils (7) in Längsrichtung (13) mit Ausrichtung ihrer Betätigungsachsen (18, 19) parallel zu der Teilungsebene (10) weitgehend mittig über den Membranen (16, 17) des Einlassventils (6) und des Auslassventils (7) in dem Gehäusedeckel (12, 12') angeordnet sind, der Gehäusedeckel (12, 12') ein zentrales, mit Ventilbohrungen (20 - 23) und Steuerkanälen (24 - 29) versehenes Einlegeteil (30, 30') aufweist, in das die Magnetspulen (31, 32) und die mechanischen Bauteile (33 - 38) der Vorsteuerventile (8, 9) eingesetzt sind, und das mit einem Kunststoff (39, 39') umspritzt ist und die Vorsteuerventile (8, 9) als separate Magnetventile ausgebildet sind, die mit entgegengesetzter Schaltrichtung und jeweils der Membran (16, 17) des zugeordneten Einlass- oder Auslassventils (6, 7) zugewandtem Ventilsitz (40, 41) achsparallel sowie radial in einer Ebene (III) parallel zur Teilungsebene (10) nebeneinander in dem Einlegeteil (30, 30') angeordnet sind.

2. Ventileinheit nach Anspruch 1, **dadurch gekennzeichnet, dass** das Einlegeteil (30, 30') aus zwei Teilen (42, 43; 42', 43') besteht, welche die Magnetspulen (31, 32) und die mechanischen Bauteile (33, 34, 35, 36, 37, 38) der Magnetventile (8, 9) stirnseitig umfassen.

3. Ventileinheit nach Anspruch 1 oder 2, **dadurch gekennzeichnet, dass** die mechanischen Bauteile (33, 34, 35, 36, 37, 38) der Magnetventile (8, 9) jeweils in einer Ventilpatrone (93) zusammengefasst sind.

4. Ventileinheit (1.3) zur Druckmodulation in einer Druckluft-Bremsanlage, mit einem Bremsdruckeingang (3), einem Bremsdruckausgang (4) und einem Entlüftungsausgang (5), sowie mit einem als Membranventil ausgebildeten Einlassventil (6), einem als Membranventil ausgebildeten Auslassventil (7), und mit jeweils einem als 3/2-Wege-Magnetventil ausgebildeten Vorsteuerventil (8", 9") für jedes Membranventil (6, 7), welche in einem länglichen Ventilgehäuse (2) angeordnet sind, das mit einer in Einbaulage weitgehend horizontalen Teilungsebene (10) in ein Basisgehäuse (11) und einen Gehäusedeckel (12") unterteilt ist, wobei der Bremsdruckeingang (3) und der Bremsdruckausgang (4) sowie der Entlüftungsausgang (5) in dem Basisgehäuse (11) angeordnet sind, die Membranventile (6, 7) in dem Basisgehäuse (11) zwischen dem Bremsdruckeingang (3) und dem Bremsdruckausgang (4) mit parallelen Betätigungsachsen (14, 15) und einer Anordnung der Membranen (16, 17) in einer gemeinsamen, weitgehend der Teilungsebene (10) entsprechenden Membranebene unter Einspannung zwischen dem Basisgehäuse (11) und dem Gehäusedeckel (12") in Längsrichtung (13) hintereinander angeordnet sind, die Vorsteuerventile (8", 9") in dem Gehäusedeckel (12") angeordnet sind, **dadurch gekennzeichnet, dass** das Vorsteuerventil (8") des Einlassventils (6) und das Vorsteuerventil (9") des Auslassventils (7) in Längsrichtung (13) mit paralleler Ausrichtung ihrer Betätigungsachsen (18, 19; 67) zu der Teilungsebene (10) weitgehend mittig über den Membranen (16, 17) des Einlassventils (6) und des Auslassventils (7) in dem Gehäusedeckel (12") angeordnet sind, und dass der Gehäusedeckel (12") ein zentrales, mit Ventilbohrungen (68, 69) und Steuerkanälen (70 - 75) versehenes Einlegeteil (30") aufweist, in das die Magnetspulen (66) und die mechanischen Bauteile (76 - 82) der Vorsteuerventile (8", 9") eingesetzt sind, und das mit einem Kunststoff (39") umspritzt ist, und die Vorsteuerventile (8", 9") in einem Doppelankermagnetventil (65) mit einer gemeinsamen Magnetspule (66) zusammengefasst sind, in dem die einzelnen Magnetventile (8", 9") mit entgegengesetzter Schaltrichtung und jeweils der Membran (16, 17) des zugeordneten Einlass- oder Auslassventils (6, 7) zugewandtem Ventilsitz (91, 92) koaxial und axial benachbart zueinander in dem Einlegeteil (30") angeordnet sind.

5. Ventileinheit nach Anspruch 4, **dadurch gekennzeichnet, dass** die Magnetspule (66) des Doppelankermagnetventils (65) mit einem niedrigen und einem hohen Strom bestrombar ausgebildet ist, und dass die Vorsteuerventile (8", 9") derart ausgebildet sind, dass das dem Einlassventil (6) zugeordnete Magnetventil (8") durch eine Bestromung der Magnetspule (66) mit dem niedrigen Strom umgeschaltet wird, wogegen das dem Auslassventil (7) zugeordnete Magnetventil (9") erst durch eine Bestromung der Magnetspule (66) mit dem hohen Strom umgeschaltet wird.

6. Ventileinheit nach Anspruch 4, **dadurch gekennzeichnet, dass** die Magnetspule (66) des Doppelankermagnetventils (65) einen Mittelabgriff zur Teilbestromung aufweist, und dass die Vorsteuerventile (8", 9") derart ausgebildet sind, dass das dem Einlassventil (6) zugeordnete Magnetventil (8") durch eine Teilbestromung der Magnetspule (66) umgeschaltet wird, wogegen das dem Auslassventil (7) zugeordnete Magnetventil (9") erst durch eine Vollbestromung der Magnetspule (66) umgeschaltet wird.

7. Ventileinheit nach einem der Ansprüche 4 bis 6, **dadurch gekennzeichnet, dass** das Einlegeteil (30") aus zwei Teilen (42", 43") besteht, welche die Magnetspule (66) und die mechanischen Bauteile (76, 77, 78, 79, 80, 81, 82) des Doppelankermagnetventils (65) stirnseitig umfassen.

8. Ventileinheit nach einem der Ansprüche 4 bis 7, **dadurch gekennzeichnet, dass** die mechanischen Bauteile (76, 77, 78, 79, 80, 81, 82) des Doppelankermagnetventils (65) in einer Ventilpatrone (93) zusammengefasst sind.

9. Ventileinheit nach einem der Ansprüche 1 bis 8, **dadurch gekennzeichnet, dass** das Einlegeteil (30) des Gehäusedeckels (12, 12', 12") bis an die Teilungsebene (10) des Ventilgehäuses (2) heranreicht und die Steuerkammern (50, 51) der Membranventile (6, 7) zumindest teilweise begrenzt.

10. Ventileinheit nach Anspruch 9, **dadurch gekennzeichnet, dass** in dem Gehäusedeckel (12) zumindest nahe der Steuerkammern (50, 51) der Membranventile (6, 7) Dichtelemente (54 - 57) zwischen dem Einlegeteil (30) und der Umspritzung (39) angeordnet sind.

11. Ventileinheit nach einem der Ansprüche 1 bis 8, **dadurch gekennzeichnet, dass** das Einlegeteil (30') des Gehäusedeckels (12') bis an die Teilungsebene (10) des Ventilgehäuses (2) heranreicht und die Steuerkammern (50, 51) der Membranventile (6, 7) vollständig überdeckend begrenzt.

12. Ventileinheit nach einem der Ansprüche 1 bis 11, **dadurch gekennzeichnet, dass** innerhalb der Umspritzung (39, 39') des Gehäusedeckels (12, 12') Anschlusskabel (44) der Magnetspulen (31, 32) verlegt sind, die in einer mit der Umspritzung (39, 39') angeformten Anschlussbuchse (45) enden.

13. Ventileinheit nach einem der Ansprüche 1 bis 12, **dadurch gekennzeichnet, dass** der Bremsdruckeingang (3) und der Bremsdruckausgang (4) mit horizontaler Ausrichtung in einer Längsrichtung (13) weitgehend axial gegenüberliegend sowie der Entlüftungsausgang (5) dazwischen vertikal nach unten gerichtet in dem Basisgehäuse (11) angeordnet sind.

## Claims

1. Valve unit (1.1; 1.2) for modulating the pressure in a pneumatic brake system, said valve unit having a brake pressure inlet (3), a brake pressure outlet (4), a vent outlet (5), an inlet valve (6) designed as a diaphragm valve, an outlet valve (7) designed as a diaphragm valve, and a pilot valve (8, 9) designed as a 3/2-way solenoid valve for each diaphragm valve (6, 7), these being arranged in an elongate valve housing (2), which is subdivided by means of a parting plane (10), which is largely horizontal in the installed position, into a main housing (11) and a housing cover (12, 12'), wherein the brake pressure inlet (3), the brake pressure outlet (4), and the vent outlet (5) are arranged in the main housing (11), the diaphragm valves (6, 7) are arranged in series in the longitudinal direction (13) in the main housing (11), between the brake pressure inlet (3) and the brake pressure outlet (4), with parallel actuation axes (14, 15) and arrangement of the diaphragms (16, 17) in a common diaphragm plane corresponding largely to the parting plane (10), being clamped between the main housing (11) and the housing cover (12, 12'), the pilot valves (8, 9) are arranged in the housing cover (12, 12'), **characterized in that** the pilot valve (8) of the inlet valve (6) and the pilot valve (9) of the outlet valve (7) are arranged in the longitudinal direction (13) in the housing cover (12, 12'), largely centrally above the diaphragms (16, 17) of the inlet valve (6) and the outlet valve (7), and with their actuation axes (18, 19) aligned parallel to the parting plane (10), the housing cover (12, 12') has a central insert (30, 30'), which is provided with valve bores (20-23) and control channels (24-29) and into which the solenoids (31, 32) and the mechanical components (33-38) of the pilot valves (8, 9) are inserted, said insert being encapsulated with a plastic material (39, 39'), and the pilot valves (8, 9) are designed as separate solenoid valves, which are arranged axially parallel and radially adjacent to one another in a plane (III) parallel to the parting plane (10) in the insert (30, 30') with opposite switching directions and a valve seat (40, 41) in each case facing the respective diaphragm (16, 17) of the associated inlet or outlet valve (6, 7).

2. Valve unit according to Claim 1, **characterized in that** the insert (30, 30') consists of two parts (42, 43; 42', 43'), which enclose the solenoids (31, 32) and the mechanical components (33, 34, 35, 36, 37, 38) of the solenoid valves (8, 9) at the ends.

3. Valve unit according to Claim 1 or 2, **characterized in that** the mechanical components (33, 34, 35, 36, 37, 38) of the solenoid valves (8, 9) are each assembled in a valve cartridge (93).

4. Valve unit (1.3) for modulating the pressure in a pneumatic brake system, said valve unit having a brake pressure inlet (3), a brake pressure outlet (4), a vent outlet (5), an inlet valve (6) designed as a diaphragm valve, an outlet valve (7) designed as a diaphragm valve, and a pilot valve (8", 9") designed as a 3/2-way solenoid valve for each diaphragm valve (6, 7), these being arranged in an elongate valve housing (2), which is subdivided by means of a parting plane (10), which is largely horizontal in the installed position, into a main housing (11) and a housing cover (12"), wherein the brake pressure inlet (3), the brake pressure outlet (4), and the vent outlet (5) are arranged in the main housing (11), the diaphragm valves (6, 7) are arranged in series in the longitudinal direction (13) in the main housing (11), between the brake pressure inlet (3) and the brake pressure outlet (4), with parallel actuation axes (14, 15) and arrangement of the diaphragms (16, 17) in a common diaphragm plane corresponding largely to the parting plane (10), being clamped between the main housing (11) and the housing cover (12"), the pilot valves (8", 9") are arranged in the housing cover (12"), **characterized in that** the pilot valve (8") of the inlet valve (6) and the pilot valve (9") of the outlet valve (7) are arranged in the longitudinal direction (13) in the housing cover (12"), largely centrally above the diaphragms (16, 17) of the inlet valve (6) and the outlet valve (7), and with their actuation axes (18, 19; 67) aligned parallel to the parting plane (10), and **in that** the housing cover (12") has a central insert (30"), which is provided with valve bores (68, 69) and control channels (70-75) and into which the solenoids (66) and the mechanical components (76-82) of the pilot valves (8", 9") are inserted, said insert being encapsulated with a plastic material (39"), and the pilot valves (8", 9") are combined in a double armature solenoid valve (65) having a common solenoid (66), in which the individual solenoid valves (8", 9") are arranged coaxially and axially adjacent to one another in the insert (30") with opposite switching directions and a valve seat (91, 92) in each case facing the respective diaphragm (16, 17) of the associated inlet or outlet valve (6, 7).

5. Valve unit according to Claim 4, **characterized in that** the solenoid (66) of the double armature solenoid valve (65) is designed in such a way that it can be energized with a low and a high current, and **in that** the pilot valves (8", 9") are designed in such a way that the solenoid valve (8") associated with the inlet valve (6) is switched over by energization of the solenoid (66) with the low current, whereas the solenoid valve (9") associated with the outlet valve (7) is switched over only when the solenoid (66) is energized with the high current.

6. Valve unit according to Claim 4, **characterized in that** the solenoid (66) of the double armature solenoid valve (65) has a central pickoff for partial energization, and **in that** the pilot valves (8", 9") are designed in such a way that the solenoid valve (8") associated with the inlet valve (6) is switched over by partial energization of the solenoid (66), whereas the solenoid valve (9") associated with the outlet valve (7) is switched over only by full energization of the solenoid (66).

7. Valve unit according to one of Claims 4 to 6, **characterized in that** the insert (30") consists of two parts (42", 43"), which enclose the solenoid (66) and the mechanical components (76, 77, 78, 79, 80, 81, 82) of the double armature solenoid valve (65) at the ends.

8. Valve unit according to one of Claims 4 to 7, **characterized in that** the mechanical components (76, 77, 78, 79, 80, 81, 82) of the double armature solenoid valve (65) are assembled in a valve cartridge (93).

9. Valve unit according to one of Claims 1 to 8, **characterized in that** the insert (30) of the housing cover (12, 12', 12") extends as far as the parting plane (10) of the valve housing (2) and at least partially delimits the control chambers (50, 51) of the diaphragm valves (6, 7).

10. Valve unit according to Claim 9, **characterized in that** sealing elements (54-57) are arranged in the housing cover (12) between the insert (30) and the encapsulation (39), at least in the vicinity of the control chambers (50, 51) of the solenoid valves (6, 7).

11. Valve unit according to one of Claims 1 to 8, **characterized in that** the insert (30') of the housing cover (12') extends as far as the parting plane (10) of the valve housing (2) and delimits the control chambers (50, 51) of the diaphragm valves (6, 7), fully overlapping said chambers.

12. Valve unit according to one of Claims 1 to 11, **characterized in that** connection cables (44) of the solenoids (31, 32), which end in a connection socket (45) formed integrally with the encapsulation (39, 39'), are laid within the encapsulation (39, 39') of the housing cover (12, 12').

13. Valve unit according to one of Claims 1 to 12, **characterized in that** the brake pressure inlet (3) and the brake pressure outlet (4) are arranged largely axially opposite in horizontal alignment in the longitudinal direction (13), and the vent outlet (5) in vertically downward alignment therebetween, in the main housing (11).

## Revendications

1. Unité de soupape (1.1; 1.2) pour la modulation de la pression dans une installation de freinage pneumatique, avec une entrée de pression de freinage (3), une sortie de pression de freinage (4) et une sortie de ventilation (5), ainsi qu'avec une soupape d'entrée (6) formée par une soupape à membrane, une soupape de sortie (7) formée par une soupape à membrane, et avec chaque fois une soupape pilote (8, 9) formée par une soupape magnétique à 3/2 voies pour chaque soupape à membrane (6, 7), qui sont disposées dans un boîtier de soupapes allongé (2), qui est divisé en un boîtier de base (11) et un couvercle de boîtier (12, 12') par un plan de séparation largement horizontal (10) en position de montage, dans laquelle l'entrée de pression de freinage (3) et la sortie de pression de freinage (4) ainsi que la sortie de ventilation (5) sont disposées dans le boîtier de base (11), les soupapes à membrane (6, 7) sont disposées l'une derrière l'autre en direction longitudinale (13) dans le boîtier de base (11) entre l'entrée de pression de freinage (3) et la sortie de pression de freinage (4) avec des axes d'actionnement parallèles (14, 15) et un agencement des membranes (16, 17) dans un plan de membranes commun correspondant largement au plan de séparation (10) avec serrage entre le boîtier de base (11) et le couvercle de boîtier (12, 12'), les soupapes pilotes (8, 9) sont disposées dans le couvercle de boîtier (12, 12'), **caractérisée en ce que** la soupape pilote (8) de la soupape d'entrée (6) et la soupape pilote (9) de la soupape de sortie (7) sont disposées dans le couvercle de boîtier (12, 12') en direction longitudinale (13) avec orientation de leurs axes d'actionnement (18, 19) parallèlement au plan de séparation (10) largement au milieu au-dessus des membranes (16, 17) de la soupape d'entrée (6) et de la soupape de sortie (7), le couvercle de boîtier (12, 12') présente une pièce d'insertion centrale (30, 30') dotée d'alésages de soupape (20 - 23) et de canaux de commande (24 - 29), dans laquelle les bobines magnétiques (31, 32) et les composants mécaniques (33 - 38) des soupapes pilotes (8, 9) sont logés, et qui est enrobée d'une matière plastique (39, 39'), et les soupapes pilotes (8, 9) sont formées par des soupapes magnétiques séparées, qui sont disposées l'une à côté de l'autre dans la pièce d'insertion (30, 30') avec un sens de commutation opposé et chacune avec les axes parallèles et avec le siège de soupape (40, 41) tourné vers la membrane (16, 17) de la soupape d'entrée ou de sortie associée (6, 7) ainsi que radialement dans un plan (III) parallèle au plan de séparation (10).

2. Unité de soupape selon la revendication 1, **caractérisée en ce que** la pièce d'insertion (30, 30') se compose de deux parties (42, 43; 42', 43'), qui comprennent côté frontal les bobines magnétiques (31, 32) et les composants mécaniques (33, 34, 35, 36, 37, 38) des soupapes magnétiques (8, 9).

3. Unité de soupape selon la revendication 1 ou 2, **caractérisée en ce que** les composants mécaniques (33, 34, 35, 36, 37, 38) des soupapes magnétiques (8, 9) sont rassemblés respectivement dans une cartouche de soupape (93).

4. Unité de soupape (1.3) pour la modulation de la pression dans une installation de freinage pneumatique, avec une entrée de pression de freinage (3), une sortie de pression de freinage (4) et une sortie de ventilation (5), ainsi qu'avec une soupape d'entrée (6) formée par une soupape à membrane, une soupape de sortie (7) formée par une soupape à membrane, et avec chaque fois une soupape pilote (8", 9") formée par une soupape magnétique à 3/2 voies pour chaque soupape à membrane (6, 7), qui sont disposées dans un boîtier de soupapes allongé (2), qui est divisé en un boîtier de base (11) et un couvercle de boîtier (12") par un plan de séparation largement horizontal (10) en position de montage, dans laquelle l'entrée de pression de freinage (3) et la sortie de pression de freinage (4) ainsi que la sortie de ventilation (5) sont disposées dans le boîtier de base (11), les soupapes à membrane (6, 7) sont disposées l'une derrière l'autre en direction longitudinale (13) dans le boîtier de base (11) entre l'entrée de pression de freinage (3) et la sortie de pression de freinage (4) avec des axes d'actionnement parallèles (14, 15) et un agencement des membranes (16, 17) dans un plan de membranes commun correspondant largement au plan de séparation (10) avec serrage entre le boîtier de base (11) et le couvercle de boîtier (12"), les soupapes pilotes (8", 9") sont disposées dans le couvercle de boîtier (12"), **caractérisée en ce que** la soupape pilote (8") de la soupape d'entrée (6) et la soupape pilote (9") de la soupape de sortie (7) sont disposées dans le couvercle de boîtier (12") en direction longitudinale (13) avec orientation de leurs axes d'actionnement (18, 19; 67) parallèlement au plan de séparation (10) largement au milieu au-dessus des membranes (16, 17) de la soupape d'entrée (6) et de la soupape de sortie (7), et **en ce que** le couvercle de boîtier (12") présente une pièce d'insertion centrale (30") dotée d'alésages de soupape (68, 69) et de canaux de commande (70 - 75), dans laquelle les bobines magnétiques (66) et les composants mécaniques (76 - 82) des soupapes pilotes (8", 9") sont logés, et qui est enrobée d'une matière plastique (39"), et les soupapes pilotes (8", 9") sont rassemblées en une soupape magnétique à double induit (65) avec une bobine magnétique commune (66), dans laquelle les soupapes magnétiques individuelles (8", 9") sont disposées de façon coaxiale et à proximité axiale l'une de l'autre dans la pièce d'insertion (30") avec un sens de commutation opposé et chacune avec un siège de soupape (91, 92) tourné vers la membrane (16, 17) de la soupape d'entrée ou de sortie associée (6, 7).

5. Unité de soupape selon la revendication 4, **caractérisée en ce que** la bobine magnétique (66) de la soupape magnétique à double induit (65) peut être parcourue par un courant faible et un courant élevé, et **en ce que** les soupapes pilotes (8", 9") sont configurées de telle manière que la soupape magnétique (8") associée à la soupape d'entrée (6) soit commutée par une alimentation de la bobine magnétique (66) avec le courant faible, tandis que la soupape magnétique (9") associée à la soupape de sortie (7) n'est commutée que par l'alimentation de la bobine magnétique (66) avec le courant élevé.

6. Unité de soupape selon la revendication 4, **caractérisée en ce que** la bobine magnétique (66) de la soupape magnétique à double induit (65) présente une prise moyenne pour l'alimentation partielle, et **en ce que** les soupapes pilotes (8", 9") sont configurées de telle manière que la soupape magnétique (8") associée à la soupape d'entrée (6) soit commutée par une alimentation partielle de la bobine magnétique (66), tandis que la soupape magnétique (9") associée à la soupape de sortie (7) n'est commutée que par une alimentation totale de la bobine magnétique (66).

7. Unité de soupape selon l'une quelconque des revendications 4 à 6, **caractérisée en ce que** la pièce d'insertion (30") se compose de deux parties (42", 43"), qui comprennent côté frontal la bobine magnétique (66) et les composants mécaniques (76, 77, 78, 79, 80, 81, 82) de la soupape magnétique à double induit (65).

8. Unité de soupape selon l'une quelconque des revendications 4 à 7, **caractérisée en ce que** les composants mécaniques (76, 77, 78, 79, 80, 81, 82) de la soupape magnétique à double induit (65) sont rassemblés dans une cartouche de soupape (93).

9. Unité de soupape selon l'une quelconque des revendications 1 à 8, **caractérisée en ce que** la pièce d'insertion (30) du couvercle de boîtier (12, 12', 12") se prolonge jusqu'au plan de séparation (10) du boîtier de soupape (2) et limite au moins en partie les chambres de commande (50, 51) des soupapes à membrane (6, 7).

10. Unité de soupape selon la revendication 9, **caractérisée en ce que** des éléments d'étanchéité (54 - 57) sont disposés entre la pièce d'insertion (30) et l'enrobage (39) dans le couvercle de boîtier (12) au moins à proximité des chambres de commande (50, 51) des soupapes à membrane (6, 7).

11. Unité de soupape selon l'une quelconque des revendications 1 à 8, **caractérisée en ce que** la pièce d'insertion (30') du couvercle de boîtier (12') se prolonge jusqu'au plan de séparation (10) du boîtier de soupape (2) et limite en recouvrement total les chambres de commande (50, 51) des soupapes à membrane (6, 7).

12. Unité de soupape selon l'une quelconque des revendications 1 à 11, **caractérisée en ce que** des câbles de raccordement (44) des bobines magnétiques (31, 32), qui se terminent dans une douille de raccordement (45) formée avec l'enrobage (39, 39'), sont posés à l'intérieur de l'enrobage (39, 39') du couvercle de boîtier (12, 12').

13. Unité de soupape selon l'une quelconque des revendications 1 à 12, **caractérisée en ce que** l'entrée de pression de freinage (3) et la sortie de pression de freinage (4) sont disposées avec une orientation horizontale dans une direction longitudinale (13) largement en opposition axiale et la sortie de ventilation (5) est disposée entre celles-ci en position orientée verticalement vers le bas dans le boîtier de base (11).
